# EUROPEAN PATENT APPLICATION

(11) **EP 1 099 386 A2**
(43) Date of publication of application: **16.05.2001**
(21) Application number: 00123690.0
(22) Date of filing: 30.10.2000
(51) Int. Cl.: A23L 2/38, A23F 5/44

(54) **Drink derived from the skin of potatoes and its method of production**

(30) Priority: 09.11.1999 IT BA990036
(71) Applicant: Tricarico, Domenico, 70038 Terlizzi (Bari) (IT)
(72) Inventor: Tricarico, Domenico, 70038 Terlizzi (Bari) (IT)
(74) Representative: Turini, Laura

(57) **Abstract**

This invention consists of a drink obtained by the infusion in water, or other similar method, of the skin, of potatoes, previously dried, roasted and crushed into grains or powder. Once the basic mixture is produced, the drink derives from the grains or the powder, by infusion or using suitable apparatus and systems similar to the ones used for coffee or tea. This drink may be made impromptu or at industrial level so that it can be sold in long-term bottles or tins.

## Description

### Technical Field

The present invention relates to the technical sector of the production of food and particularly drinks to have impromptu or to preserve. It concerns a drink and a process for deriving, from the skin of potatoes, a delicious thirst-quenching drink with therapeutic properties.

### Background Art

Other particular drinks are known, deriving from roasted coffee beans, which take then the typical flavour of coffee.

They are crushed into grains or powder, in order to make a drink rich in carbohydrates, proteins and caffeine, by infusion or using tools like mocha or espresso machines.

Drinks like tea are also known, which are obtained by infusing the dried leaves of the homonym evergreen bush. Similarly, different infusions of herbs and other beverage are made by infusing the dried leaves of particular bushes.

On the contrary, drinks deriving from potatoes, and particularly from their skin, are not known.

The potato is a common food, spread all around the world, but its skin is usually eliminated and almost never used. A lot of industrial firms peel and chip potatoes in order to sell them like crisps or frozen chips or other, and their skin is usually thrown away. All that involves a substantial expenditure for the waste disposal and a considerable waste of substances.

Recent studies have proven that the skin of potatoes comprises iron, calcium, vitamins and above all a large quantity of antioxidants, which have a preventive effect against many diseases, such as cancer, arthritis, arteriosclerosis, etc.

For all these reasons, it's very important to reclaim the skin of potatoes and use it in such a way that it can be eaten, so as not to throw away with it the vitamin inheritance it holds.

### Disclosure of invention

The present invention principally aims at eliminating the above-mentioned and other drawbacks, teaching a new function of the skin of potatoes as basic substance for the realization of a drink, and supplying a process for deriving such a drink from the skin of potatoes, using drying and roasting methods.

The advantages resulting from the present invention essentially consist of the fact that it's possible to derive a drink from the skin of potatoes, which have a delicious taste and high therapeutic properties. In this way, it's possible to use the skin of potatoes that would be otherwise thrown away, bringing advantages to the consumer and also from a commercial point of view, implying a substantial saving in expenditure.

In addition, this new function of the skin of potatoes allows people using only the flesh, not only to save in waste disposal, but even to profit by selling others a product that would be otherwise lost.

The present invention has important effects from a medical and food point of view, and even positive results on the environment as it permits to recycle perfectly a material that would otherwise increase the total amount of rubbish.

In the following description we'll briefly refer to the term "skin" or "skin of potatoes", meaning the external part of the potato, comprising the external flesh of the same potato.

The invention at issue relates to a drink derived from the drying, roasting and crushing of the external part of the potato comprising the skin, reduced in powder or grains, from which this drink is obtained by means of processes similar to the ones used for tea or coffee.

Reduced to its essential structure, a method for the production of drinks deriving from the skin of potatoes, according to the invention, comprises the following phases:
- removal of the external part of the potato comprising the skin, its washing and cleaning;
- drying of the removed skin, in order to use it as basic substance of the drink;
- roasting of the dried skin, in order to make it aromatic;
- crushing of the roasted skin, in order to easily use it for the making of a drink;
- packaging of the powder or the grains so obtained and their infusion in hot water, in order to get a drink by a process similar to the one used for tea or coffee.

Conveniently, the external part of the potato comprising the skin can be washed and cleaned before, during or after the removal phase.

Conveniently, the crushing of the dried skin can make it into powder or grains, according to the way it's going to be used.

Conveniently, the powder so obtained may be used in place of coffee powder with normal coffee machines using the same processes.

Conveniently, the grains may be used in order to get some infusions (with one or two teaspoons) by the same processes used for tea. Therefore, it's possible to sell the powder or the grains derived from the skin of potatoes, packaged into tins or filter bags, as tea or coffee are usually sold.

Conveniently, the drying is carried out by spreading the skin, divided from the internal flesh, over a shady place for a few days, or by using suitable apparatus.

Conveniently, the roasted skin is crushed, like coffee beans, into grains or powder.

The drinks so obtained have a delicious taste and seem to have high therapeutic properties, such as: effect against depression, hair strengthening, antioxidant, expectorant and anti-viral. They may be an aid in the cure for cold, bronchitis, flu, but even for serious viral illnesses and maybe for many tumours.

Since this invention has been described and illustrated only as a practical but not restrictive example, it may have many versions according to industrial, commercial or other needs.

As a consequence, this patent application shall include any equivalent product realized according to any characteristic described in the separate claims.

## Claims

1. Drink characterised by the fact that it is obtained by means of infusion, or similar method, of the external part of potatoes, comprising the skin, which is duly treated.

2. Method for the production of a drink according to claim 1, characterized by the fact that it comprises the following phases:
- removal of the external part of the potato comprising the skin, its washing and cleaning;
- drying of the removed skin, in order to use it as basic substance of the drink;
- roasting of the dried skin, in order to make it aromatic;
- crushing of the roasted skin, in order to easily use it for the making of a drink;
- packaging of the powder or the grains so obtained and their infusion in hot water, in order to get a drink by a process similar to the one used for tea or coffee.

3. Drink and its method of production according to claims 1 and 2, characterized by the fact that the skin representing the basic substance of the drink can vary as regards thickness, from less than a millimetre up to few millimetres, comprising also part of the external flesh.

4. Drink and its method of production according to claims 1 and 2, characterized by the fact that the skin can be washed and cleaned before, during or after its removal from the potatoes.

5. Drink and its method of production according to claims 1 and 2, characterized by the fact that the external part of the potato comprising the skin is crushed so as to make it into powder or grains; it's then used in these different forms in order to allow the consumer to make a drink with the same processes and the same devices used for making coffee or tea.

6. Drink and its method of production according to claims 1 and 2, characterized by the fact that it may be made impromptu or preserved in bottles or tins ready to use.

7. Drink and its method of production according to claims 1 and 2, characterized by the fact that the drying of the skin of potatoes is carried out by spreading the skin, divided from the flesh, over a shady place for a few days, or by using suitable apparatus.
